# FASCICULE DE BREVET EUROPEEN

(11) **EP 1 422 206 B1**
(45) Date de publication et mention de la délivrance du brevet: **19.07.2017**
(21) Numéro de dépôt: 03292924.2
(22) Date de dépôt: 25.11.2003
(51) Int. Cl.: C04B 28/02, C04B 14/22, C04B 41/53

(54) **Liant hydraulique notamment destiné à la fabrication de bétons décoratifs**
Hydraulisches Bindemittel zur Herstellung von Sichtbeton
Hydraulic binder for manufacture of decorative concrete surfaces

(30) Priorité: 25.11.2002 FR 0214722
(43) Date de publication de la demande: 26.05.2004
(73) Titulaire: Envirocem, S.L., 28002 Madrid (ES)
(72) Inventeur: Audiger, Baptiste, 31400 Toulouse (FR); Baudracco, Joseph, 31320 Vigoulet-Auzil (FR); Escadeillas, Gilles, 31280 Aigrefeuille (FR); Salmon, Roland, 31170 Tournefeuille (FR)
(74) Mandataire: Urizar Anasagasti, Jesus Maria

(56) Documents cités:
- EP-A- 0 521 286
- WO-A-01/34532
- WO-A-01/79132
- WO-A-02/070424
- CH-A- 688 550
- JP-A- 11 240 744
- DATABASE WPI Section Ch, Week 199105 Derwent Publications Ltd., London, GB; Class L02, AN 1991-034521 XP002270130 & KR 9 001 726 A (HWANG I) 19 mars 1990 (1990-03-19)
- FUKUDA TAKETO: "CONCRETE WITH LUSTROUS SURFACE" CHEMICAL ABSTRACTS + INDEXES, AMERICAN CHEMICAL SOCIETY. COLUMBUS, US, vol. 109, no. 20, 1 novembre 1988 (1988-11-01), page 319, XP000056913 ISSN: 0009-2258

## Description

La présente invention concerne un liant hydraulique, notamment destiné à la réalisation de bétons décoratifs, ainsi qu'un procédé d'élaboration de ces derniers.

Depuis quelques années on a en effet réalisé des bétons, dénommés bétons désactivés, qui sont obtenus par une opération de balayage de la surface du béton après la prise partielle de celui-ci et attaque chimique superficielle. L'opération de balayage permet de mettre à nu les granulats de ces bétons qui constituent ainsi un décor qui est fonction de leur nature, de leur grosseur et de leur couleur propre.

Cette technique, pour intéressante qu'elle soit sur le plan esthétique, présente cependant des difficultés de mise en oeuvre qui sont liées notamment au fait qu'entre l'opération de coulée du béton et l'opération de balayage, il est nécessaire à l'opérateur de patienter pendant la période de prise, ce qui, en raison de la durée de celle-ci, l'oblige le plus souvent à quitter le chantier pour y revenir ensuite. Par ailleurs, les produits désactivants utilisés d'une part sont d'un coût élevé, ce qui grève d'autant le prix de revient de ce type de procédé, et d'autre part ils constituent, en raison de leur nature, des causes de pollution de l'environnement. Par ailleurs il n'est pas possible à l'utilisateur de doser in situ le degré de décapage du béton dans la mesure où celui-ci est uniquement fonction de la quantité de désactivant répandu préalablement sur le sol, et non de l'intensité du balayage effectué.

On cannaît également, par le brevet FR-A-2 779 714, un liant hydraulique constitué de verre silicaté industriel et d'au moins un réactif basique apte à porter l'eau du ciment, après gâchage de celui-ci, à un pH au moins égal à 10. De tels liants permettent d'utiliser en les valorisant les déchets de verre qui proviennent notamment de l'industrie verrière, des verres de collecte qui ne possèdent pas des caractéristiques techniques suffisantes pour être réutilisées dans l'industrie verrière et que l'on désigne habituellement comme étant « refus de tri optique». La présente invention permet également d'utiliser des machefers de verre, c'est-à-dire des déchets de verre provenant d'usines d'incinération d'ordures ménagères, notamment dans des fours à lits fluidisés.

On remarquera que les liants hydrauliques obtenus suivant cette technique précitée ne sont pas utilisables pour constituer des bétons pourvus de caractéristiques mécaniques élevées, notamment pour constituer des dalles aptes à la circulation de véhicules etc...

La présente invention a pour but de remédier à ces inconvénients en proposant un liant hydraulique permettant de réaliser un béton présentant des qualités décoratives voisines de celles obtenues avec le béton désactivé de l'état antérieur de la technique, mais sans faire appel pour sa mise en oeuvre à un produit désactivant, et qui de plus peut être "balayé" très rapidement après son opération de coulée. De plus le béton obtenu suivant la présente invention permet, en fonction de l'intensité du balayage effectué, de doser le niveau d'apparition des granulats et de ce fait l'apparence de la surface obtenue.

La présente invention a ainsi pour objet un liant hydraulique, notamment destiné à constituer un béton/mortier décoratif, caractérisé en ce qu'il est constitué d'un mélange de ciment Portland, avec au moins 50% d'au moins une variété de verre silicaté industriel, et notamment de verre d'emballage ou de verre plat de recyclage, à l'état finement broyé. Ce ciment sera préférentiellement un CEMI de classe 52, 5 R.

La présente invention est intéressante en ce qu'elle permet d'utiliser une matière première qui est constituée d'un sous produit difficilement valorisable dans l'industrie verrière et qui, pour cette dernière, constitue ainsi un déchet, à savoir le verre d'emballage et le verre plat.

Le liant suivant l'invention vient en complément de celui obtenu par la technique antérieure précédemment mentionnée en ce que le réactif basique apte à porter l'eau du ciment, après gâchage de celui-ci, à un pH au moins égal à 10 est constitué d'un "ciment Portland". Ainsi, suivant l'invention, le clinker assure deux fonctions, à savoir une première fonction suivant laquelle il fait réagir le verre finement broyé à l'effet d'un réactif basique et une seconde fonction dans laquelle il génère des résistances mécaniques importantes à court terme, de l'ordre de quelques heures à quelques jours, qui permettent, dans des temps très courts, d'utiliser un béton formé à partir de ce liant et de le rendre apte à la circulation. Le verre utilisé aura une granulométrie comprise entre 10 µm et 35 µm.

En fonction des applications envisagées on pourra faire appel à un ciment de couleur blanche ou grise.

La présente invention a également pour objet un béton constitué d'un liant hydraulique, de sable et de gravier caractérisé en ce que le liant est constitué d'un mélange de ciment Portland, avec au moins 50% d'au moins une variété de verre silicaté industriel, et notamment de verre d'emballage ou de verre plat de recyclage, à l'état finement broyé.

On a constaté qu'en gâchant le béton avec une quantité d'eau telle que la fluidité du béton coulé possédait un degré d'affaissement au cône d'Abrams compris entre 0 et 5 cm, il était possible de procéder au balayage du béton très rapidement après la coulée de celui-ci, c'est-à-dire quelques heures, voire quasiment immédiatement lorsque le béton est bien sec (affaissement au cône d'Abrams voisin de 0).

Préférentiellement la quantité d'eau présente dans une gâchée de 1 m³ de béton est d'environ 150 litres.

La présente invention a également pour objet un procédé de réalisation d'un béton ou d'un mortier décoratif caractérisé en ce qu'il comporte les étapes consistant à :
- réaliser un béton à partir d'un liant constitué d'un mélange de ciment Portland, avec au moins 50% d'au moins une variété de verre silicaté industriel, et notamment de verre d'emballage ou de verre plat de recyclage, à l'état finement broyé,
- après la prise partielle de ce béton, effectuer un décapage contrôlé de sa surface afin d'en évacuer le mortier afin de faire apparaître les granulats masqués par celui-ci. Le décapage sera plus au moins prononcé en fonction de l'aspect souhaité par l'utilisateur.

Préférentiellement entre la réalisation du béton et son décapage contrôlé, on assure l'application de celui-ci sur le site par réglage et vibro-compactage.

La présente invention présente de nombreux avantages, outre le fait que, ainsi que mentionné précédemment, elle permet tout d'abord de valoriser un produit considéré jusqu'à présent comme un déchet et permet ensuite de découvrir les granulats contenus dans le béton sans qu'il soit nécessaire de faire appel à des produits chimiques désactivants. Elle permet de plus d'obtenir un béton plus sec, ce qui facilite sa manutention et évite notamment d'être contraint de le transporter dans des camions spéciaux de type à toupie rotative. A titre d'exemple la quantité d'eau présente dans une gâchée sera préférentiellement de 150 litres pour 1m³ de béton.

Enfin l'accroissement des résistances mécaniques des bétons ainsi réalisés s'effectue à très long terme sur environ une année, alors que dans les bétons classiques à base de ciment Portland la dureté finale est atteinte au bout de un à trois mois. Paradoxalement on a par ailleurs constaté qu'il permettait d'obtenir des résistances mécaniques suffisamment élevées à très court terme, de l'ordre de quelques heures à quelques jours, permettant ainsi de pouvoir circuler rapidement sur une chape en béton réalisée à partir de ce liant.

On décrira ci-après, à titre d'exemple non limitatif une forme d'exécution de la présente invention, en référence aux dessins annexés sur lesquels :
La figure 1 est un diagramme représentant la variation de la résistance à la compression d'un mortier suivant l'invention en fonction du temps et ceci pour différentes concentrations du liant en poudre de verre.
La figure 2 est un diagramme représentant la variation de la résistance à la compression d'un béton suivant l'invention en fonction du temps et ceci pour différentes concentrations du liant en poudre de verre.

Suivant l'invention on procède tout d'abord à une opération de malaxage au cours de laquelle on gâche les différents éléments constituant ce béton, à savoir un liant formé lui-même de poudre de verre et de ciment de type CEMI de classe 52,5 R, (c'est-à-dire un ciment dont la résistance à la compression dans un mortier normalisé après 28 jours de durcissement est d'au moins 52,5 Mpa) et d'agrégats formés de sable et de gravier et éventuellement d'adjuvants, puis l'on réalise la coulée de ce béton en le réglant, de façon à obtenir une épaisseur uniforme, et en le compactant notamment à l'aide de moyens vibrants tels que par exemple un compacteur (vibro compactage). On réalisé le gâchage en utilisant une quantité d'eau telle que, après celui-ci, le degré d'affaissement au cône d'Abrams soit d'environ de 2 cm.

Pour obtenir un aspect de surface ressemblant à celui obtenu à partir de béton désactivé, on soumet celle-ci à un décapage, pouvant notamment être constitué par une sorte de grattage effectué par exemple avec un balai, ce grattage étant plus ou moins prononcé suivant que l'on souhaite faire apparaître plus ou moins les granulats à la surface de celui-ci. On peut également réaliser ce décapage par lavage notamment par pulvérisation d'un jet d'eau sous pression.

Contrairement aux procédés de l'état antérieur de la technique suivant lesquels on réalise le béton désactivé et/ou l'on est contraint d'attendre une longue période pouvant être de l'ordre de vingt quatre à quarante huit heures avant d'effectuer cette opération, il est ici possible de réaliser celle-ci quasiment immédiatement après la coulée du béton ou, dans l'hypothèse ou le béton est humide, (degré d'affaissement au cône d'Abrams égal à 4) quelques heures après cette coulée.

On remarquera de plus que, suivant l'invention, il n'est nul besoin de soumettre la surface du béton précédemment coulé à l'action d'un quelconque produit chimique désactivant, ce qui représente d'une part une économie en ce qui concerne le coût de mise en oeuvre du procédé et d'autre part une meilleure préservation de l'environnement.

En ce qui concerne la résistance mécanique des liants suivant l'invention, des essais ont été effectués sur des mortiers normalisés en appliquant les règles habituelles, et l'on a regroupé dans le tableau ci-après les résistances à la compression au bout respectivement de 7 jours, 28 jours, 90 jours et 180 jours pour quatre pourcentages de poudre de verre dans le liant suivant l'invention, étant entendu que l'autre constituant de celui-ci était le ciment.

| Quantité de déchets dans le liant (%) | Quantité de ciment (%) | R_{c} à 7 jours (Mpa) | R_{c} à 28 jours (Mpa) | R_{c} à 90 jours (Mpa) | R_{c} à 180 jours (Mpa) |
|---|---|---|---|---|---|
| 70 | 30 | 5 | 15,9 | 29,6 | 34,8 |
| 80 | 20 | 3,2 | 11,6 | 22 | 25,6 |
| 90 | 10 | 1,6 | 6,5 | 11,5 | 13,3 |
| 95 | 5 | 1,2 | 3,5 | 6,8 | 8,1 |

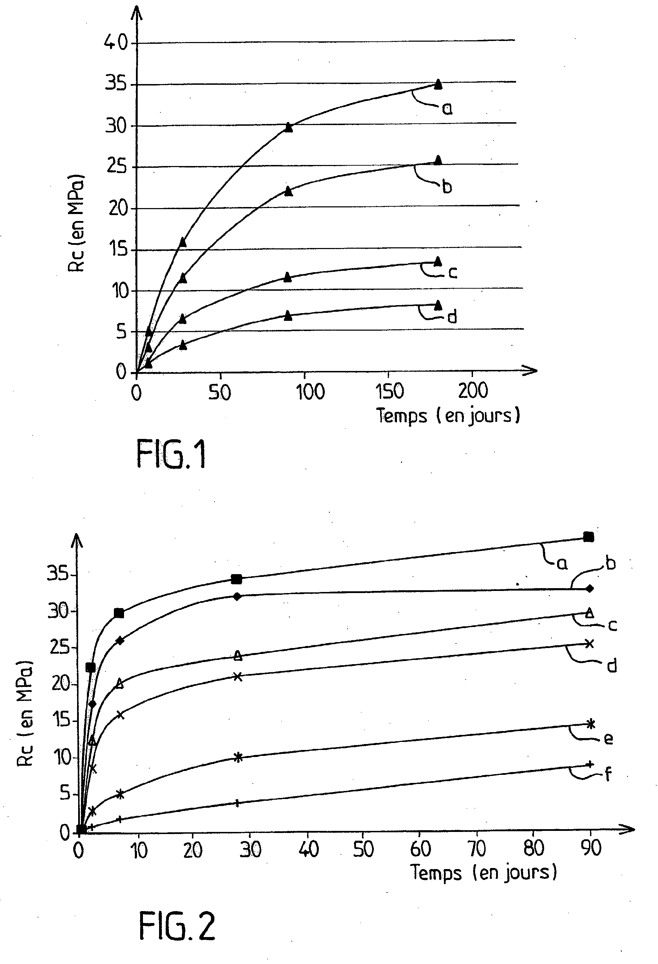

Les résultats de ce tableau ont été reportés sur la figure 1 ou les courbes a; b ; c et d représentent respectivement 70%; 80%; 90% et 95% de déchets de verre. La granulométrie moyenne du verre utilisé était de 16 µm.

On a également porté sur la figure 2 la variation de la résistance à la compression R_{c} en fonction du temps d'un béton suivant l'invention où les courbes a,b,c,d,e,f représentent respectivement 0%, 15%, 30%, 45%, 60% et 80% de déchets de verre.

Ces essais ont ainsi montré que les résistances à la compression obtenues au bout d'un temps donné sont fonction de la quantité de verre présente dans le liant. Par ailleurs il a été établi que cette résistance à la compression était également fonction de la quantité de liant et de la granulométrie du verre utilisé.

On a ainsi constaté que pour obtenir des résistances mécaniques élevées, il était nécessaire d'augmenter la quantité de liant hydraulique dans le béton ou d'augmenter la quantité de ciment dans le liant hydraulique, ou diminuer la granulométrie du verre auquel on fait appel de façon à augmenter la réactivité de celui-ci.

## Revendications

1. Liant hydraulique, notamment destiné à constituer un béton/mortier décoratif, **caractérisé en ce qu'**il est constitué d'un mélange de ciment Portland, avec au moins 50% d'au moins une variété de verre silicaté industriel, et notamment de verre d'emballage ou de verre plat de recyclage, broyé à une granulométrie moyenne comprise entre 10 µm et 35 µm.

2. Liant hydraulique suivant la revendication 1 **caractérisé en ce que** le ciment Portland est un CEMI de classe 52,5 R.

3. Liant hydraulique suivant l'une des revendications 1 ou 2 **caractérisé en ce que** le ciment Portland est un ciment blanc.

4. Béton décoratif constitué d'un liant hydraulique, de sable et de gravier, **caractérisé en ce que** le liant est constitué d'un mélange de ciment Portland, avec au moins 50% d'au moins une variété de verre silicaté industriel, et notamment de verre d'emballage ou de verre plat de recyclage, broyé à une granulométrie moyenne comprise entre 10 µm et 35 µm.

5. Béton décoratif suivant la revendication 4, **caractérisé en ce qu'**il est gâché avec une quantité d'eau telle que son affaissement au cône d'Abrams est compris entre 0 et 5 cm.

6. Béton décoratif suivant la revendication 5 **caractérisé en ce que** la quantité d'eau présente dans une gâchée de 1m³ de béton est de 150 litres.

7. Procédé de réalisation d'un béton/mortier décoratif **caractérisé en ce qu'**il comporte les étapes consistant à :
- réaliser un béton/mortier suivant l'une des revendications 4 à 6,
- après la prise partielle de ce béton, effectuer un décapage contrôlé de sa surface afin d'en évacuer une partie du mortier afin de faire apparaître les granulats masqués par celui-ci.

8. Procédé suivant la revendication 7 **caractérisé en ce que**, entre la réalisation du béton décoratif et son décapage contrôlé on assure l'application de celui-ci sur le site par réglage et vibro-compactage.

9. Procédé suivant l'une des revendications 7 à 8, **caractérisé en ce que** le décapage est effectué par brossage.

10. Utilisation d'un liant hydraulique selon l'une des revendications 1 à 3 pour la réalisation de bétons décoratifs à granulats apparents.

## Patentansprüche

1. Hydraulisches Bindemittel, das insbesondere dazu bestimmt ist, einen Sichtbeton/Mörtel herzustellen, **dadurch gekennzeichnet, dass** es aus einer Portlandzementmischung mit mindestens 50 % aus mindestens einer industriellen Silicatglas-Sorte und insbesondere Behälterglas oder recyceltem Flachglas hergestellt ist, die zu einer durchschnittlich zwischen 10 µm und 35 µm umfassenden Korngröße gemahlen ist.

2. Hydraulisches Bindemittel nach Anspruch 1, **dadurch gekennzeichnet, dass** der Portlandzement von der Klasse 52,5 R CEM I ist.

3. Hydraulisches Bindemittel nach Anspruch 1 oder 2, **dadurch gekennzeichnet, dass** der Portlandzement ein weißer Zement ist.

4. Sichtbeton, der aus hydraulischem Bindemittel, Sand und Kies hergestellt ist, **dadurch gekennzeichnet, dass** das Bindemittel aus einer Portlandzementmischung mit mindestens 50 % aus mindestens einer industriellen Silicatglas-Sorte, und insbesondere Behälterglas oder recyceltem Flachglas, hergestellt ist, die zu einer durchschnittlich zwischen 10 µm und 35 µm umfassenden Korngröße gemahlen ist.

5. Sichtbeton nach Anspruch 4, **dadurch gekennzeichnet, dass** er mit einer Wassermenge gemischt wird, so dass das Setzmaß nach Abrams davon zwischen 0 und 5 cm umfasst.

6. Sichtbeton nach Anspruch 5, **dadurch gekennzeichnet, dass** die Wassermenge in 1 m³ einer Betonmischung 150 Liter beträgt.

7. Herstellungsverfahren für einen Sichtbeton/Mörtel, **dadurch gekennzeichnet, dass** es die aus Folgendem bestehenden Schritte enthält:
- Herstellen eines Betons/Mörtels nach einem der Ansprüche 4 bis 6,
- Durchführen eines kontrollierten Abtragens der Oberfläche des Betons, nachdem dieser teilweise ausgehärtet ist, um einen Teil des Mörtels zum Aufdecken des von ihm verdeckten Zuschlags zu entfernen.

8. Verfahren nach Anspruch 7, **dadurch gekennzeichnet, dass** zwischen dem Herstellen des Sichtbetons und des kontrollierten Abtragens desselben, das Auftragen desselben auf die Fläche durch Nivellieren und Rütteldruckverdichten sichergestellt ist.

9. Verfahren nach einem der Ansprüche 7 bis 8, **dadurch gekennzeichnet, dass** das Abtragen durch Abbürsten durchgeführt wird.

10. Verwenden eines hydraulischen Bindemittels nach einem der Ansprüche 1 bis 3, um Sichtbeton mit sichtbaren Zuschlägen herzustellen.

## Claims

1. A hydraulic binder particularly intended to make up a decorative concrete/mortar, **characterised in that** it is made up of a Portland cement blend, with at least 50% of at least one type of industrial silicate glass, and particularly container glass or recycled flat glass, ground to an average grain size comprised between 10 µ and 35 µ.

2. The hydraulic binder according to claim 1, **characterised in that** the Portland cement is a class 52.5 R CEM I.

3. The hydraulic binder according to one of claims 1 or 2, **characterised in that** the Portland cement is a white cement.

4. A decorative concrete made up of a hydraulic binder, sand and gravel, **characterised in that** the binder is made up of a Portland cement blend, with at least 50% of at least one type of industrial silicate glass, and particularly container glass or recycled flat glass, ground to an average grain size comprised between 10 µ and 35 µ.

5. The decorative concrete according to claim 4, **characterised in that** it is mixed with an amount of water such that the Abrams slump cone thereof is comprised between 0 and 5 cm.

6. The decorative concrete according to claim 5, **characterised in that** the amount of water in a mixture of 1 m³ of concrete is 150 litres.

7. A manufacturing method for a decorative concrete/mortar, **characterised in that** it includes the steps consisting of:
- making a concrete/mortar according to one of claims 4 to 6,
- after this concrete has partially set, carrying out a controlled blasting of the surface thereof in order to remove a portion of the mortar in order to reveal the aggregate covered by the same.

8. The method according to claim 7, **characterised in that**, between making the decorative concrete and the controlled blasting thereof, the application of the same on the area is ensured by levelling and vibro-compacting.

9. The method according to one of claims 7 to 8, **characterised in that** the blasting is carried out by brush-blasting.

10. A use of a hydraulic binder according to one of claims 1 to 3 to make decorative concretes with visible aggregates.
